Europäisches Patentamt

European Patent Office

Office européen des brevets

(19)

(11) Publication number: **0 288 670 B1**

(12) **EUROPEAN PATENT SPECIFICATION**

(45) Date of publication of patent specification: **05.02.92**    (51) Int. Cl.⁵: **A01G 31/02**

(21) Application number: **88101871.7**

(22) Date of filing: **09.02.88**

(54) **System for hydroculture.**

(30) Priority: **27.04.87 JP 101991/87**

(43) Date of publication of application:
**02.11.88 Bulletin 88/44**

(45) Publication of the grant of the patent:
**05.02.92 Bulletin 92/06**

(84) Designated Contracting States:
**AT BE CH DE ES FR GB GR IT LI LU NL SE**

(56) References cited:
**FR-A- 2 202 639**
**US-A- 1 508 028**
**US-A- 4 059 922**

(73) Proprietor: **O.P. Corporation**
**4-13, Shibuya 1-chome Shibuya-ku**
**Tokyo(JP)**

(72) Inventor: **Akagi, Shizuka**
**3890-140, Sekidocho Ohazadai-machi**
**Higashikatsushika-gun Chiba-ken(JP)**

(74) Representative: **Strehl, Schübel-Hopf, Groening**
**Maximilianstrasse 54 Postfach 22 14 55**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a hydroculture system for well organized, efficient and economical cultivation of substantially uniform plants.

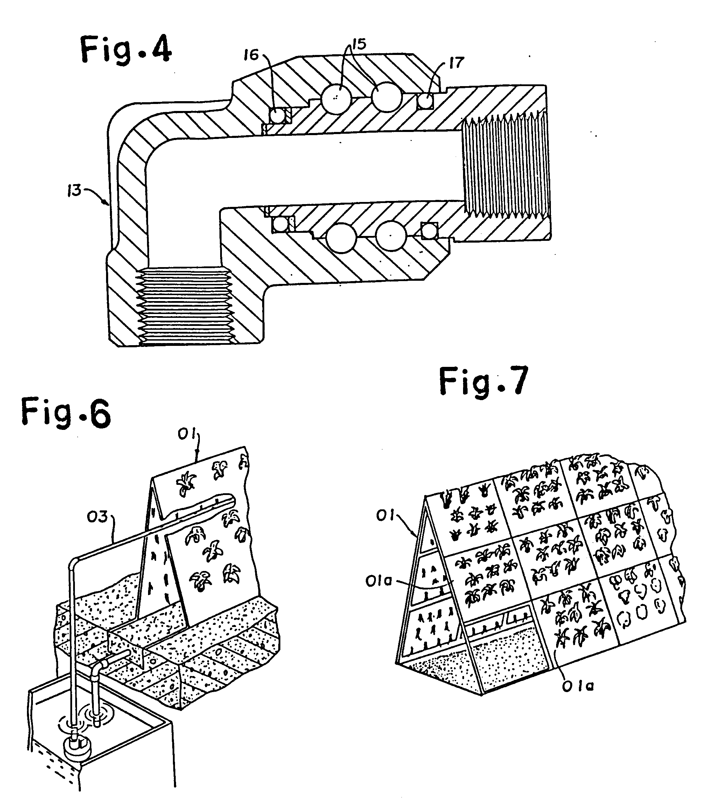

An example of conventional systems for hydroculture known in the prior art is disclosed in FR-A-2202639. As shown in Fig. 6 of the attached drawings, the conventional system uses perforated panels 01 assembled in triangle for supporting plants, a transparent dome 02 to take in the solar light, and is provided with a nutrient solution spray mechanism 03 shown in Fig. 7 to spray nutrients to the vegetable roots for raising them. The nutrient solution spray mechanism 03 is fixedly mounted inside the panels 01, and is provided in the longitudinal direction of the panels 01 with a plurality of spray nozzles for spraying nutrients to the roots of the vegetables supported by the panels 01.

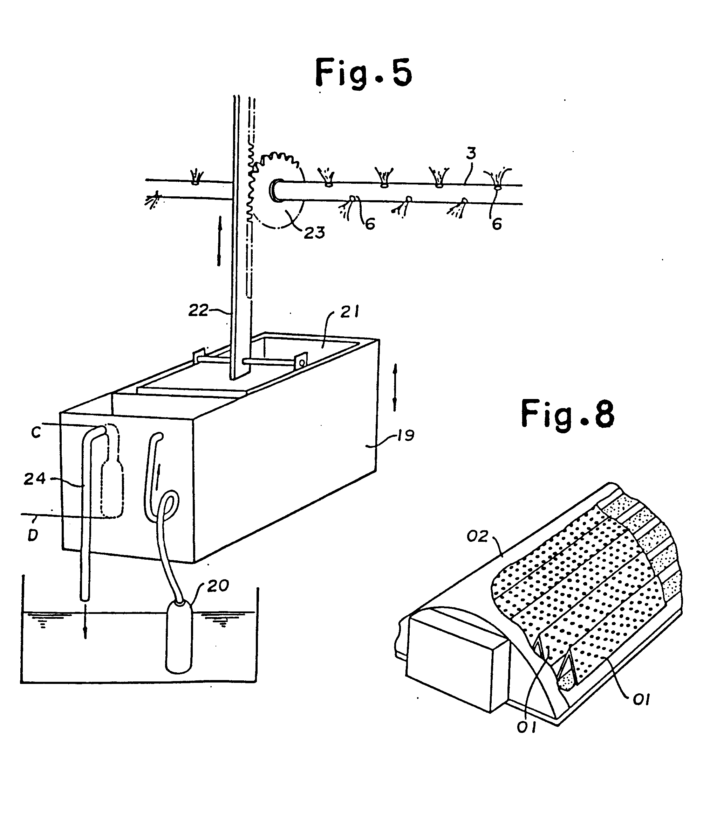

The panel 01a is dismounted from the frame as shown in Fig. 8 to harvest the fully grown vegetables.

The above mentioned prior art system was defective, however, in that the spray direction of nutrients was fixed and invariable, and in that the vegetable roots could not be sprayed uniformly depending on their location. This resulted in non-uniform growth of plants.

There was proposed a system to obviate such problems of non-uniform growth wherein the nutrient solution is sprayed from a mobile stand moving between the panels. This system, however, was also detrimental in that the cost for building a mechanism for moving the stand was very high.

It is an object of the present invention to provide a hydroculture system which ensures a uniform feeding of nutrient solution to the vegetable roots, at the same time maintaining any waste of nutrient solution at a minimum.

This object is met by the invention characterized in claim 1.

Embodiments of the present invention are now discussed in further detail by referring to attached drawing wherein

Fig. 1 is an overall perspective view of one embodiment of the present invention;
Fig. 2 is a perspective view of the rotation means for the spray tube in accordance with an embodiment of the present invention;
Fig. 3 is an explanatory view showing the scope of spray range in accordance with an embodiment of the present invention;
Fig. 4 is a cross section view of a rotary joint;
Fig. 5 is a perspective view of the rotation means for spray tube in accordance with another embodiment of the present invention, and
Figs. 6 through 8 are respectively conceptual drawings of hydroculture systems of the prior art.

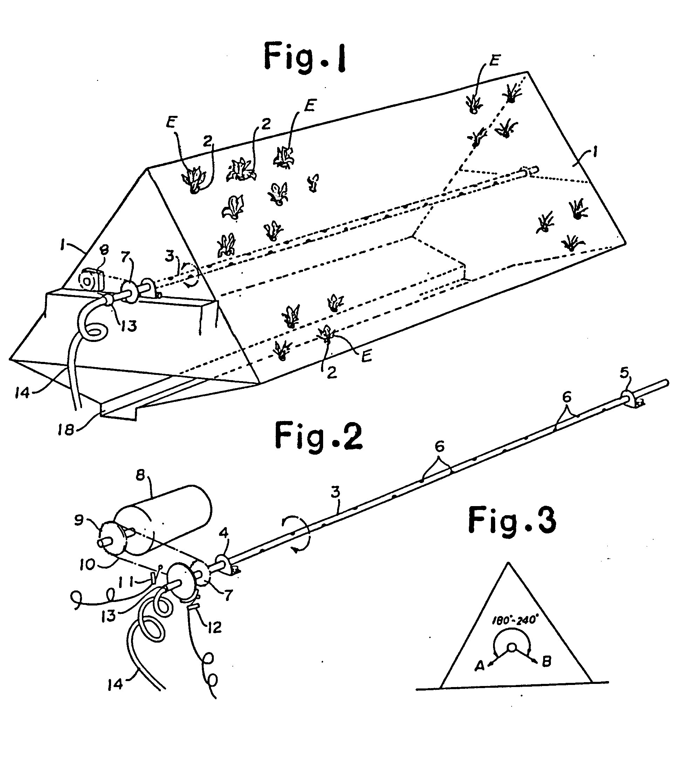

One embodiment of the present invention is shown in Figs. 1 to 3 wherein the panels 1 are provided with a plurality of bores 2 for supporting the plant seedlings in such a way as to allow growth of their roots toward the inside of a triangle formed by these panels 1. The panel 1 is generally made of foamed synthetic resin such as foamed styrol or of ceramics. Inside the triangle panels 1 is provided a spray tube 3 along the longitudinal direction of the panels with both ends thereof being supported by bearings 4, 5 in a freely rotatable manner. The spray tube 3 is provided with a plurality of nozzles 6 at predetermined intervals. Nozzles 6 may be provided in a single line as shown in the figures or in plural lines. The number of nozzles may be less than that of the conventional type spray tubes which are not freely rotatable. This feature of the reduced number of nozzles can reduce the pressure under which the nutrient solution is sprayed and also reduce the size of spray feeding mechanism. The interval between the nozzles 6 can be determined based on the species of plants being grown and the scale of panel system. Plants E which can be grown by this system include Boston lettuce, iceburg lettuce, Komatsuna green, garland chrysanthemums, spinach, trefoils, and other leaf vegetables.

As shown in Fig. 2, a sprocket 7 is fixedly mouted at one end of the spray tube 3, and a chain 10 is placed over the sprocket 7 and another sprocket 9 both of which are connected to a motor 8 to thereby make up a rotational means for the spray tube 3. The motor 8 has a known means for controlling reverse rotation (not shown). The reverse control circuit controls the motor 8 as it actuates a timer (not shown) based on the signals of two microswitches 11, 12 positioned along the outer periphery of the nutrient spray tube 3. For instance, the spray range may be limited to 180° - 240° as shown in Fig. 3 (A to B) to allow effective spraying of vegetable roots supported by the panels 1, and the spray tube 3 may be reversed within this range at predetermined interval. It may be reversed, for instance, 1 to 4 times per minute or preferably 2 to 3 times per minute. This limitation on the scope of sprayed area is advantageous in reducing the nutrient losses in spraying.

At one end of the nutrient spray tube 3 is connected a flexible hose 14 via a rotary joint 13, and at the other end of the flexible hose 14 is connected a pressure pump (not shown) for feeding the nutrient solution. The rotary joint 13 houses plural lines of ball bearings 15 as shown in Fig. 4 to allow rotation and to prevent water leakage by provision of a packing 16 and a dust seal 17. This enables feeding of the nutrient solution to the spray tube 3 which is rotating.

The hydroculture system embodying the above described construction according to the present invention is used in the following manner.

When the nutrient solution is fed under pressure to the spray tube 3 via the flexible hose 14 and the rotary joint 13, the solution is sprayed through the nozzles 6. The motor 8 is then actuated to rotate the spray tube 3 via the chain 10 and the sprockets 7, 9, the direction of spraying changing continuously to effect uniform spray of the nutrient solution. When either one of the microswitches 11, 12 is turned on, the spray tube 3 is reversed by the reverse control circuit in order to stop spraying of the solution onto the floor, thus eliminating losses of the solution. The microswitches 11, 12 are alternatingly turned on thereafter to repeat the reversion of the spraying direction of the spray tube 3. The reference number 18 in the figure denotes a groove for recovery of nutrient solutions. Although the nozzles 6 are positioned in a zig zag fashion on the spray tube 3 shown in the figure, they may be positioned linearly. The light irradiated on the vegetables need not be limited to natural light; it may be artificial light. The means for rotating and reversing the spray tube 3 may not be limited to the one described in connection with the above embodiment, but it may be of a type utilizing the hydraulic energy as shown in Fig. 5.

Fig. 5 shows a tank 19 to which the water is continuously fed from a pump 20, and a float 21 which is vertically movable is placed in the tank. The float 21 is connected to a vertical rack 22, which in its turn is engaged with a pinion 23 inserted over the spray tube 3. A siphon 24 is attached to the tank 19, on the other hand, with its suction mouth bent downwardly. When the water level C rises to the bent portion of the siphon 24, the water in the tank 19 begins to be discharged out of the siphon 24, while when the water level D drops below the position of the mouth of the siphon 24, the water discharge is suspended.

Since the water level in the tank 19 of the device shown in Fig. 5 goes up and down between C and D causing the vertical movement of the float 21 and the rack 23, the pinion 23 and the spray tube 3 rotate within a prescribed range. The range or rotation for the spray tube 3 can be determined by adjusting the height of the suction mouth of the siphon 24, while the rotational speed can be controlled by varying the amount of water fed by the pump 20 and the size of the siphon 24.

The device shown in Fig. 5 has no electrical system, and has the added advantages of avoiding electrical breakdowns attributable to humidity.

(Effects of the Invention)

As described concretely by way of reference to embodiments, the present invention enables uniform spraying of nutrient solution (particularly in the vertical direction) by changing the direction of sprays and therefore achieves uniform growth of vegetables. The means for rotating the spray tube is comparatively inexpensive in building, and the mechanism for pressure feeding can be miniaturized in size so that the efficient use of the cultivation area is enabled.

## Claims

1. A hydroculture system, including a spray tube (3) disposed between panels (1) supporting vegetables, said spray tube (3) being provided with nozzles (6) for spraying a nutrient solution onto the vegetable roots, and a pressure mechanism for feeding the nutrient solution under pressure to the spray tube (3),
characterized by means (7 ... 10; 19 ... 24) for rotating the spray tube (3) through an angle range corresponding to the area where the vegetable roots are disposed, and for reversing the rotation at predetermined intervals.

2. The system of claim 1, wherein said angle range is from 180° to 240°.

3. The system of claim 1 or 2, wherein the nozzles (6) are provided at predetermined intervals in the longitudinal direction of the spray tube (3).

4. The system of any of claims 1 to 3, wherein the panels (1) are assembled to form a structure of triangular cross-section.

## Revendications

1. Système d'hydroculture, comprenant un tube de pulvérisation (3) disposé entre des panneaux (1) supportant des végétaux, ledit tube de pulvérisation (3) étant muni de buses (6) afin de pulvériser une solution nutritive sur les racines des végétaux, et un mécanisme de pression afin de délivrer la solution nutritive sous pression au tube de pulvérisation (3), caractérisé par des moyens (7...10; 19...24) pour faire tourner le tube de pulvérisation (3) sur une plage angulaire correspondant à la région dans laquelle sont disposées les racines des végétaux, et pour inverser la rotation à des intervalles prédéterminés.

2. Système selon la revendication 1, dans lequel ladite plage angulaire est comprise entre 180° et 240°.

**3.** Système selon la revendication 1 ou 2, dans lequel les buses (6) sont disposées à des intervalles prédéterminés dans le sens longitudinal du tube de pulvérisation (3).

**4.** Système selon l'une quelconque des revendications 1 à 3, dans lequel les panneaux (1) sont assemblés pour constituer une structure de section triangulaire.

**Patentansprüche**

**1.** Hydrokultursystem mit einem Sprührohr (3), das zwischen Pflanzen tragenden Paneelen (1) angeordnet und mit Düsen (6) zum Sprühen einer Nährlösung auf die Pflanzenwurzeln versehen ist, und einem Druckmechanismus zur Zuführung der Nährlösung unter Druck an das Sprührohr (3),
gekennzeichnet durch eine Einrichtung (7...10; 19...24) zum Drehen des Sprührohres (3) innerhalb eines Winkelbereichs, der der Zone entspricht, in der die Pflanzenwurzeln angeordnet sind, und zur Umsteuerung der Drehung in vorgegebenen Intervallen.

**2.** System nach Anspruch 1, wobei der Winkelbereich 180° bis 240° beträgt.

**3.** System nach Anspruch 1 oder 2, wobei die Düsen (6) in vorgegebenen Abständen in Längsrichtung des Sprührohrs (3) vorgesehen sind.

**4.** System nach einem der Ansprüche 1 bis 3, wobei die Paneele (1) in einem Aufbau mit dreieckigem Querschnitt angeordnet sind.

# Fig.1

# Fig.2

# Fig.3

180°-240°

## Fig.4

## Fig.6

## Fig.7

# Fig.5

# Fig.8